# EUROPEAN PATENT APPLICATION

(11) **EP 3 971 632 A1**
(43) Date of publication of application: **23.03.2022**
(21) Application number: 20814520.1
(22) Date of filing: 16.07.2020
(51) Int. Cl.: G02B 27/01

(54) **AUTOMOBILE WINDSCREEN DISPLAY**

(30) Priority: 17.05.2019 RU 2019115151
(71) Applicant: Obschestvg s Ogranichennoy Otvetstvennostyu "Scientific Technical Center "Biolumen", Fryazino, 141195 (RU)
(72) Inventor: ULASYUK, Vladimir Nikolaevich, Fryazino, 141190 (RU)
(74) Representative: Sach, Greg Robert
(86) International application number: PCT/RU2020/000349
(87) International publication number: WO 2020/242346

(57) **Abstract**

The invention relates to electronic engineering, more specifically to displays on a car windshield, even more specifically to projection liquid crystal displays with biologically adequate backlighting based on semiconductor light-emitting diodes (LEDs) for displaying augmented reality images on a car windshield. The display on the windshield of a car includes LED backlighting arranged in series along the optical axis, consisting of at least one LED with a peak blue radiation wavelength of 475-490 nm, an optical film system including diffusely scattering and raster prismatic films designed to ensure uniformity illumination radiation, and a composite (zoned) composite photoluminescent film containing photoluminescent substances in a transparent base for converting blue LED radiation into green-blue radiation for the augmented reality display area and red radiation for the warning information display area, monochrome liquid crystal display, a Fresnel lens that magnifies the image formed on the liquid crystal display into the space in front of the windshield of the vehicle. The technical result consists in reducing the harmful effects of display radiation on the body of the driver and passengers of the car, simplifying the design, increasing the reliability and efficiency of the display on the windshield of the car.

## Description

### The technical field to which the invention relates

The invention relates to electronic engineering, more specifically to displays on a car windshield, even more specifically to projection liquid crystal displays with biologically adequate backlighting based on semiconductor light-emitting diodes (LEDs) for displaying augmented reality images on a car windshield.

### State of the art

The prior art known US patent US8269652 B2, 18.09.2012, which proposes a device for displaying graphic information, characterized in that a practically transparent screen on a preselected part of the windshield contains light-emitting particles of one or more types or microstructure that form a luminous display. That is, the information is displayed directly on the windshield. The disadvantage of this technical solution is the low contrast of the image in daylight sunlight.

To solve the acute problem of deteriorating the visibility of the image on the windshield of a vehicle with a high level of external illumination, in US patent US 8436952 B2, 05/07/2013, a hybrid device for displaying information on the windshield is proposed, including a backlight system with a special optical element that mixes radiation from the external emitting from an internal light source connected to an internal electrical supply, and thus provides uniform illumination of the projection liquid crystal display (LCD), ensuring high brightness in daylight conditions. The disadvantages of the known device are the complexity of the design and low color contrast of the image in daylight sunlight, which is a consequence of one of the main disadvantages of windshield displays created on the basis of LCDs - the disappearance of the image at a certain limiting value of the transmitted light flux of the backlight due to insufficient resistance of liquid crystal materials to an increase in temperature in the central zone of the LCD due to increasing heating by radiation with an increase in the luminous flux of the backlight. Spurious absorption of backlight radiation, for example, in active matrix LCD elements (polaroids, color microfilters, electrodes and thin-film transistors, etc.) can reach 90%, leading to overheating of the most poorly cooled central part of an active matrix LCD and blurring of the image in the center of the display.

The technical solution proposed in the well-known patent RU2424541, 10/20/2011, which describes a device for displaying information on the windshield of a vehicle, including an image source, which is a liquid crystal matrix with LED backlight, a mirror that receives light from the image source, and a concave aspherical mirror guiding light on the windshield, differs in that the mirror that receives light from the image source is made convex aspherical. Although this solution provides correction of distortion distortions, improvement of the correction of curvature and astigmatism of the formed image in a wide field of view, it does not eliminate the aforementioned fundamental limitation of the limiting power of the backlight.

A display device on a windshield for vehicles is known from the prior art (patent US6636277 B2, 21.10.2003), in which information from the display device is projected onto a transparent projection area on the windshield, the display device has two transparent plates, between which liquid crystal substance is located and electrodes, the polarized light penetrates through the liquid crystal substance, which rotates the plane of polarization of the polarized light depending on the voltage exciting the electrodes. The polarized light emanating from the liquid crystal substance is not passed through the polarizer, but is polarized by reflection in the transparent projection area or on one or more other reflectors that are located in the path of the polarized light beam between the liquid crystal substance and the transparent projection area. However, despite a certain facilitation of the thermal mode of operation due to the absence of the transfer of parasitic heat from the polaroids to the liquid crystal substance, the disadvantages of the known device are the low contrast of the image with a complicated design.

Known patent US7031067 B2, 2005-09-15, in the preferred embodiment of which is the closest to the present invention and taken as a prototype, a display device on the windshield is proposed, free from the aforementioned fundamental disadvantage of an LCD, since it includes an image source such as a laser scanner forming an image with a relatively low duty cycle of the display, light scattering means and a transparent element, which may include a holographic element. A laser scanner emits visible light to generate an image. The light diffusing means receives visible light from the laser scanner to project an image onto it and preferably applies amplification thereto. The transparent element creates a virtual or real image of the image from the light diffuser. In a vehicle, a windshield display is configured to reflect an image into the interior of the vehicle to form a virtual image in front of the driver.

The disadvantages of the display on the windshield of the patent US7031067 B2 are the low energy efficiency of the scanner and the use of coherent radiation harmful to the eyes, especially with prolonged exposure to the human eye, which is often typical for use in cars on long journeys.

The radiation of liquid crystal displays with white LED backlighting, which conquered the display technology market, is also harmful to human eyes, thanks to advances in the development of efficient light-emitting diodes (LEDs), especially nitride ones (InGaN), and the highest achievable efficiency among all known white light sources. LED solutions are most widely used in LCD backlight devices, including projection ones.

In some known technical solutions, the white light of the LED backlight was obtained by mixing the radiation of a combination of LEDs with different radiation colors, for example, blue, green and red, or blue and orange, etc.

However, in recent years, white light sources based on LEDs with photoluminophores-converters have come to the fore in terms of the scale of use, which emit yellow or orange (red) radiation when the radiation of a LED chip emitting relatively short-wave primary radiation is absorbed into a conversion photoluminescent medium, which, when irradiation with said relatively short-wavelength radiation, is excited, emitting in response a second, relatively longer-wavelength radiation. In a particular embodiment, monochrome blue or UV radiation exiting the chip is converted to white light by packaging the chip into organic and / or inorganic photoluminophores in a polymer matrix. White LEDs often include blue LEDs coated with YAG: Ce photoluminescent phosphor. High-power (one watt or more) blue LEDs have an efficiency of approximately 30-45%, with approximately 550-700 mW of heat generated from each watt applied. In addition, it is believed that when the photoluminescent phosphor converts blue light to yellow light in white LEDs, approximately 20% of the incident light energy is spent on heating the phosphorus. The technical specifications indicate that the power drop of blue LEDs is approximately 7% at 25-125 ° C, while the drop in white LEDs is approximately 20% at the same temperature. Thus, in high-power white LEDs, there are significant limitations on heat and light flux.

The development of LED substitutes for traditional small form factor fluorescent backlight lamps with a high luminous flux is one of the most pressing modern scientific and technical problems, but its solution for projection displays is very difficult due to the relatively small surface for dissipating the heat generated by LEDs in such systems. backlight.

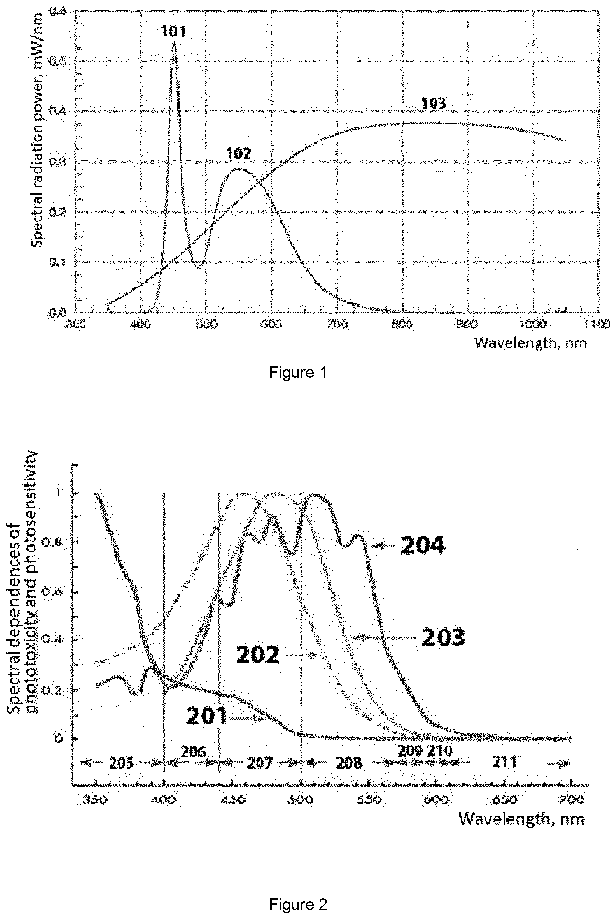

A common serious drawback of existing LED white light sources, including those used in LED display backlight systems, is the harmful effect on the human body of intense blue radiation with a wavelength of 450-470 nm that enters the human eye from LEDs due to the principle of their operation, in which The blue emission of LEDs with a relatively high intensity, namely in the wavelength range of 450-470 nm, directly forms the white emission spectrum of the LED lamp, mixing, for example, with the yellow emission of the photoluminescent phosphor excited by the LED, as is clearly shown in FIG. 1, showing the emission spectrum of a typical "blue" nitride LED coated with YAG: Ce photoluminescent phosphor, in comparison with the spectrum of an incandescent lamp, which corresponds to the solar spectrum at sunset and is de facto accepted as the standard in terms of harm to humans.

In connection with the rapid spread of LED light sources, interest in the medical and biological aspects of their application has intensified, first of all, the influence of the "new" light on the psychophysiological state of a person, as well as the possible long-term effects of LED lighting on health. The urgency of the problem is associated with the fact that the emission spectrum of the most widespread white LEDs with a phosphor coating based on YAG: Ce differs markedly from that for lamps of other types, as well as from the spectrum of sunlight by the presence of a strong band in the blue region of the spectrum 450-470 nm ("excessive blue") and a dip in the blue light region of 480 nm, having a strong influence on the circadian rhythm (biorhythm) of the human body.

Human biorhythms, being the fruit of human evolution that took place under the direct influence of the Sun, are controlled by the hormonal system, which, in turn, is controlled by the influence of external light, almost the only source of which throughout the existence of man as a species was the Sun, which controlled the biorhythms of the human body. The flame of a fire or torch, and then the light of a candle or incandescent light bulb, used for lighting in the evening for many centuries of human history, did not break the biorhythms of the human body, due to the similarity of their spectra to the solar spectrum at sunset. In the evening, the human eye is focused on the perception of red-yellow color, blue light increases eye strain and can reduce visual acuity.

Recent studies on LED lighting have revealed the mechanisms of the influence of the spectrum of direct LED lighting on a person's biological clock and his hormonal system. This influence is due to the significant content of the blue component in the spectrum of a white LED, which increases over time due to the high operating temperature of the LED and aging of its phosphor.

"Excessive blue" light in the evening is perceived by the hormonal system as a person's stay in daylight. Thus, the production of melatonin, a hormone that is responsible for the quality of sleep, is blocked - a person's circadian rhythms get confused and problems with sleep and disruption of the hormonal system appear, which interferes with important physiological processes and leads to a weakening of the immune defense, depressive disorders. decreased performance and other negative consequences for human health.

The influence of the blue component of the spectrum on the circadian rhythm is carried out through the pigments of the eyes (melanopsin) and the human hormonal system.

According to modern concepts, the human eye has two channels of radiation perception:
- visual, sensors for which are the well-known 3 types of cones (color daytime vision) and rods ("gray" twilight vision);
- a relatively recently discovered [1] non-visual or biological channel based on melanopsin-containing ganglion cells, which determines the secretion of the hormone melatonin into the blood and, thereby, regulates the states of activity and relaxation. Improper lighting and, as a result, a violation of the biochemical composition of the blood, can cause not only sleep and mental disorders, but, with prolonged exposure, contribute to the development of breast cancer.

For this reason, when a person stays in artificial lighting for a long time, the spectrum of light and the ratio of its components are especially important. This suggests that the cultivated concept of constructing lighting devices for lighting based on the direct use of LED radiation does not guarantee safety for human eyes and his health in general. For example, an international group of researchers from the University of Haifa (Israel), the National Geophysical Data Center (USA) and the Scientific and Technological Institute of Light Pollution (Italy) found [2] that LED lamps are the most hazardous to health, since they reduce the production of the hormone melatonin regulating the biological clock and having an antitumor and immunostimulating effect. Yellow sodium lamps, for example, also have this effect, but five times less and do not have such a strong effect on human health.

Melatonin regulates the work of the biological clock in the human body, has a positive effect on immunity and, as a result, partially prevents the development of tumors. The fact that blue light suppresses the production of this hormone has been known for a long time; back in 2004, the dependence of the degree of suppression of melatonin production on the spectral composition of light was established [3], but for the first time it was possible to find out quantitative indicators of how various types of electric lamps affect a person. The researchers took as a unit the level of suppression of melatonin production caused by high-pressure sodium lamps emitting yellow light. In comparison, LED bulbs suppress melatonin production more than five times more (per unit of power).

A number of studies have shown that LED light sources can cause significant harm to human and animal health by affecting the retina. The harm is caused by short-wave blue and violet light, which in the spectrum of such light sources has in some cases an intensity increased up to 30% compared to ordinary incandescent lamps. This short-wavelength radiation inflicts three types of trauma on the retina: photomechanical (shock energy of a wave of light energy), photothermal (when radiation heats up tissue), and photochemical (photons of blue and violet light can cause chemical changes in the structures of the retina). Green and natural white light has much less phototoxicity, and no negative changes were found when the retina was exposed to red light.

The summarized data on the sensitivity to the spectral distribution of light perceived by the eye are shown in FIG. 2 [4], which shows the dependences of acute UV-blue phototoxicity (Aλ), spectral sensitivity of melanopsin (M'λ, maximum sensitivity, 479-483 nm), scotopic light sensitivity (V'λ) and sensitivity to melatonin suppression (Mλ ., peak sensitivity, 459-464 nm). The potential for acute phototoxicity of UV blue light increases with decreasing wavelength. The acute phototoxicity of blue light to the retina has a spectrum of action similar to scotopic sensitivity, since rhodopsin mediates both processes. Suppression of melatonin generation and sensitivity to melanopsin are more dependent on blue light than visual functions mediated by rods (rhodopsin).

Sunlight is fundamental to all life on earth. Each living being, due to the structural organization of light-sensitive cells, perceives that part of the spectrum of sunlight that is vital for him. This part of the spectrum is biologically adequate for physiology and can serve as the basis for a qualitative and quantitative assessment of how the emission spectrum of artificial light sources is suitable for a given biological object, and, accordingly, for creating LED white light sources with a biologically adequate spectrum. For the first time the concept of "biologically adequate LED white light source" was introduced in [5] and developed in [6]. A biologically adequate spectrum of light is a set of photon fluxes that form a matrix of control signals that ensures the harmonious work of functional elements (cells) of the visual analyzer, the human hormonal system and biorhythms of the brain.

To a large extent, the biological adequacy of the artificial white light spectrum can be assessed by the effectiveness of pupil diameter control.

The protective functions of the retina are adapted to sunlight conditions. The human eye functions like a natural diaphragm: a large stream of light constricts the pupil, so that only a small stream of light passes to the retina. In conditions of insufficient lighting, the pupil, on the contrary, expands.

Shortwave blue light can pass through the cornea unhindered, causing inflammation in the eye. The main mechanism for protecting the retina from blue light emission is the macula (macula) in the center of the retina. Through the dilated pupil, all the excess flow of blue light rushes directly to the retina and falls on the edge of the macular macula, which protects the central part of the macula, that is, where its density is low. The lower the macular density, the higher the likelihood of oxidative stress on the retinal cells. Adequate pupil control in sunlight shrinks the pupil diameter, thereby providing natural retinal protection. In works [7,8] it is stated that for white light sources with a biologically adequate spectrum, including incandescent lamps at a hygienically safe color temperature less than 4000K, the photon flux at 450-460 nm should be less than the photon flux at 480 nm.

The dip in the spectrum of traditional LED white light sources at 480 nm, which is absent in the solar spectrum either in the daytime or at sunset, falls on the region of maximum melanopsin sensitivity, which determines the opening of the pupil of the eye, and thus leads to inadequate control of the opening of the pupil under conditions conventional LED lighting, resulting in an enlarged pupil area and a cumulative excess dose of blue light, increasing the risk of developing eye diseases.

The situation is especially difficult in children, since the lens of a child's eye is very transparent and transmits 70% more light than an adult. Under such conditions, the total excess dose of blue light injures the retina, increasing the risk of developing eye diseases. The severity of the problem was especially noted in the decision of the last third World Congress of Pediatric Ophthalmologists [9], in which it was emphasized that the general trend of safe illumination with semiconductor light sources and video-safe radiation of displays is as follows: it is necessary to have a biologically adequate spectrum that will ensure the harmonious operation of the visual analyzer and the hormonal system person.

Therefore, the problem of creating a windshield display with LED backlighting with a biologically adequate spectrum, solved in particular by the present invention, becomes more and more urgent, especially for liquid crystal displays with high-brightness LED backlight systems, intended for use not only in conditions of intense daytime sunlight, but also in the evening and at night.

The claimed invention eliminates the indicated disadvantages and makes it possible to achieve the claimed technical result.

### Disclosure of invention

The technical problem that the proposed invention solves is the creation of a projection liquid crystal display on the windshield of a car with illumination based on LEDs with conversion photoluminophores with a biologically adequate radiation spectrum, in which the harmful effects of radiation on the human body inherent in known technical solutions are significantly reduced, and are intended for use in automotive display systems with augmented reality, as well as those with a simplified design, increased reliability and efficiency in high ambient light.

The technical result consists in reducing the harmful effects of display radiation on the body of the driver and passengers of the car, simplifying the design, increasing the reliability and efficiency of projection displays on the windshield of a car in daylight sunlight.

To solve the problem with the achievement of the claimed technical result, the display on the windshield includes LED backlighting arranged in series along the optical axis, including at least one LED with a peak blue radiation wavelength of 475-490 nm, placed on a reflective heat-conducting printed circuit board with electrical leads for connecting the backlight to a power source, a system of optical films, including diffusely scattering and raster prismatic films designed to ensure uniformity of illumination radiation, and a composite (zoned) composite photoluminescent film, containing in a transparent base photoluminophores for the conversion of blue LED radiation into green-blue and red radiation, a monochrome liquid crystal display (imaging device) connected to an electronic control system (controller), a Fresnel lens projecting an image formed on the liquid crystal display into the space in front of the car through a transparent polyethylene terephthalate film placed on the windshield of the car and designed to eliminate ghosting (if necessary).

The imaging device can provide information about the vehicle speed, fuel level, engine and on-board equipment condition, navigation information, including in augmented reality format. All information to the imager comes from the controller, which is in communication with the vehicle's on-board computer and the navigation system. In addition, the controller, if necessary, corrects the relative brightness of the images across the working field of the display, associated with the zoning and the difference in the emissivity of the composite photoluminescent film.

Due to the absence of color microfilters in monochrome LCDs, parasitic absorption of backlight radiation is attenuated, which leads to overheating of the worst-cooled central part of the LCD and blurring of the image in the center of the display.

In the claimed solution, in contrast to the known ones, the LED backlight includes at least one LED with blue radiation in the range of 475-490 nm, and additionally a composite zoned composite photoluminescent film containing photoluminescent substances in a transparent base, partially converting said blue radiation into green radiation with a spectral line, the peak of which is located in the range of 510-530 nm, and the half-width of the line is at least 105 nm, and in the total white radiation of the indicated LED white light source, the maximum radiation intensity in the spectral range 459-464 nm does not exceed the minimum radiation intensity in spectral range 479-483 nm. At a certain thickness of the composite photoluminescent film and the concentration of photoluminescent phosphor in it, the condition of biological adequacy is met, including the maximum closure of the pupil of the eye at night, which in turn reduces the requirements for the collimation system of the display on the windshield and allows using only one Fresnel lens.

The thickness of the composite photoluminescent films is 50-200 microns, with the photoluminescent phosphor content in the range from 1: 1 to 2: 1 weight fractions with respect to the transparent base.

Composite photoluminescent film, in its part intended for displaying augmented reality information, contains a new photoluminophore with a composition described by the stoichiometric formula Y_{3-y-z}Lu_{y}Ce_{z}Al₅₋ₓGaₓO₁₂, where 1.8 <x <2.1, 0≤y≤2.86, 0.12≤z≤0.15.

### Brief Description of Drawings

Fig. 1. The emission spectrum of a typical "blue" nitride chip LED - 101, coated with a YAG: Ce photoluminophor with an emission spectrum of 102, and the spectrum of an incandescent lamp - 103.
Fig. 2. Graphs of spectral dependences: acute UV-blue phototoxicity (Aλ) - 201, sensitivity to suppression of melatonin generation (Mλ., Peak sensitivity, 459-464 nm) - 202, spectral sensitivity of melanopsin (M'λ, maximum sensitivity, 479-483 nm ) - 203 and scotopic aphakic light sensitivity (V'λ) - 204. In Fig. 2, indicated in [4], the subranges of wavelengths of the visible spectrum are indicated by numbers: 205 - UV <400 nm, 206 - violet 400-440 nm, 207 - blue 440-500 nm, 208 - green 500-570 nm, 209 - yellow 570-590 nm, 210 - orange 590-610 nm, 211 - red 610-700 nm.
Fig. 3. Schematic representation of the head-up display on the windshield;
Fig. 4. An enlarged schematic sectional view of a liquid crystal display on a car windshield with LED backlighting with a biologically adequate radiation spectrum;
Fig. 5. The spectrum of LED backlighting of the liquid crystal display on the windshield of a car with a biologically adequate radiation spectrum for the augmented reality display area;
Fig. 6. The spectrum of LED backlighting of the liquid crystal display on the windshield of a car with a biologically adequate radiation spectrum for the warning information display area.

### Implementation of the invention

The proposed invention is based on the technical problem of creating a high-brightness automotive display on a windshield with LED backlight, using monochrome LCD with backlight for the formation of augmented reality images based on the conversion of nitride LEDs emitting in the biologically harmless spectral range of 475-490 nm using composite photoluminescent materials based on garnet photoluminophores, while the maximum intensity of illumination in the range of 445-475 nm does not exceed the minimum intensity in the range of 479-483 nm.

The declared display on the windshield includes LED backlighting with a biologically adequate radiation spectrum, including at least one or a group of LEDs emitting blue radiation in the spectral range of 475-490 nm, placed on a heat-conducting printed circuit board with electrical leads for connecting the LEDs to a power supply , and a well-known optical film system widely used in display technology, including a diffusely scattering film and two raster microprismatic films, designed to create a uniform uniform distribution of backlight radiation on the input surface of a monochrome LCD, moreover, in the immediate vicinity of the specified input surface of the LCD, completely overlapping the specified input surface, there is a composite (zoned) composite photoluminescent film that is absent in the known analogs, containing a photoluminescent material in a transparent base that converts the radiation of blue LEDs:
- for the zone of augmented reality display in green-blue radiation, the spectral maximum of which is located in the range of 510-530 nm, and the half-width of the spectral line is at least 105 nm. As a material used in the photoluminescent film of the claimed invention that meets the specified requirements, a new phosphor is proposed, the composition of which is described by the stoichiometric formula Y_{3-y-z}Lu_{y}Ce_{z}Al₅₋ₓGaₓO₁₂, where 1.8 <x <2.1, 0≤y≤2.86, 0.12≤z≤0.15;
- for the zone of displaying warning information in red radiation, the spectral maximum of which is located at 650 nm. As a material used in the photoluminescent film of the claimed invention that meets the specified requirements, a standard calcium sulfide photoluminescent phosphor FLS-650 is proposed.

The thickness of photoluminescent films can be 50-200 microns, with the photoluminescent phosphor content in the range from 1: 1 to 2: 1 weight fractions with respect to the transparent base.

The emission spectra of LEDs are in the excitation spectral region of the proposed photoluminophores with green-blue radiation, and the maximum of the blue LED emission spectrum falls within the spectral range with the boundary located at the short-wavelength edge of the photoluminophor emission at a distance equal to the half-width of the photoluminophor emission spectrum from the position of the maximum of its spectrum radiation. This allows, at certain thicknesses of photoluminescent films and photoluminescent phosphor concentrations in them, to ensure the fulfillment of the condition for the biological adequacy of the spectrum of the emitted light (the maximum spectral intensity of illumination radiation near 460 nm does not exceed the minimum intensity in the range 479-483 nm, the absence of a spectral dip at 480 nm) at a sufficiently high backlight efficiency.

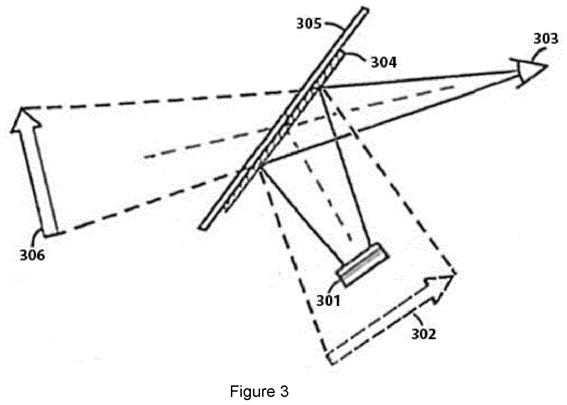

The claimed invention is illustrated in detail by FIGS. 3-6.

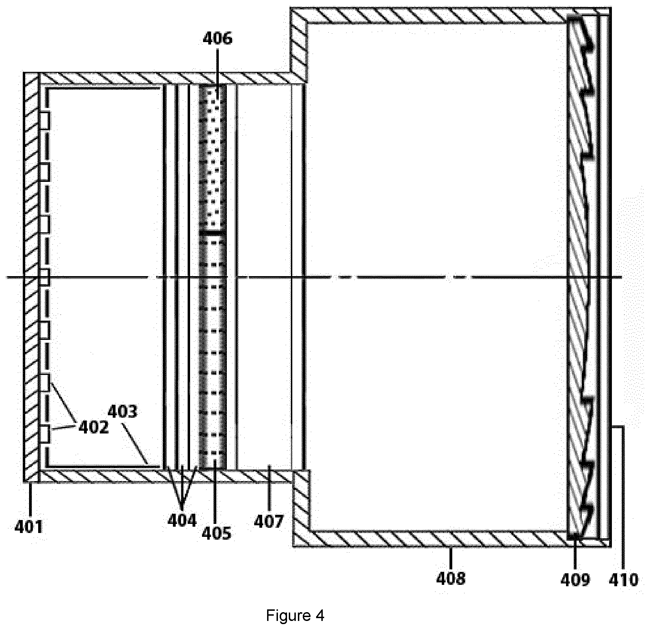

In FIG. 3, a schematic representation of the structural-optical scheme of the claimed display on the windshield is shown, including a projection liquid crystal matrix display with LED backlighting with a biologically adequate radiation spectrum and a projection lens 301 located on one optical axis, which together form a virtual enlarged image 302, which enters the eye of the driver 303 of the car after being reflected from the film 304 placed on the windshield 305 of the car, forming an intermediate image 6 located behind the windshield. The structural elements of the display are shown in detail below in FIG. 4

Film 304 is a transparent polyethylene terephthalate (PET) film, glued from the inside to the windshield of a car, and, if necessary, can be used to eliminate ghosting observed by the driver with a two-layer windshield structure. This film, which has become almost a standard attribute for car displays on the windshield, is placed in the area where light from the projector hits the windshield and allows you to get a clearer image, especially in the dark, while remaining almost invisible to the driver and without distracting him from control of road conditions.

FIG. 4 schematically shows in section (top view) a projection liquid crystal display device with LED backlighting with a biologically adequate radiation spectrum based on one of the embodiments of the display on the windshield of a car according to the invention, including a heat-conducting printed circuit board 401 with soldered to it a group (matrix) of LEDs 402 with radiation in the blue region of the spectrum (475-490 nm), a white diffusely reflecting screen 403 and a set of 404 prismatic compensatory and diffusely scattering films, designed to provide uniform illumination of the composite photoluminescent film in the augmented reality display area 405 and in the warning information display area 406, respectively, the liquid crystal display 407, the case 408, the projection plano-convex Fresnel lens 409 and the protective film 410. Conductors connecting the LEDs to the power driver and the printed circuit board are not shown.

The distance from the output surface of the liquid crystal display 407 to the Fresnel projection lens 409 determines the magnification of the image displayed on the windshield and its distance from the driver and must be less than the focal length of the Fresnel lens 409 to form a virtual magnified image according to the known laws of optics.

The use of thin large-format plastic Fresnel lenses made of modern technologies from optical plastic (PMMA) using ultra-precise injection molds that provide high optical efficiency of the lenses (more than 80%) can significantly improve the weight and size characteristics of the display on the windshield, providing a sufficiently high display resolution , resistance to ultraviolet radiation and working temperature up to 80 °C.

In the backlight of the proposed display, LEDs with blue radiation in the spectral range of 475-490 nm are used, for example, SMD LEDs of the type L135-B475003500001 manufactured by Lumileds, which, due to the emitted spectrum, provide maximum long-term constriction of the pupil of the eye in the evening and at night and, as a result, minimize requirements for the aberrations of the used Fresnel lens.

For the manufacture of the reflective screen 403, white diffusely reflecting films can be used, for example, White98 Film F-16 produced by WhiteOptics LLC, which has a high reflectance of 98%. These films are designed to be placed in LED mixing chambers and on top of LED PCBs to maximize the efficiency of LED light sources, improve lighting efficiency, diffuse light, and minimize LED hotspots.

In the combination of films 404, the well-known Vikuiti BEF microprismatic films manufactured by 3M, as well as any matte diffusing films, are used to homogenize the illumination radiation.

Protective film 410 with a micro-louver structure has a double function, protecting the working profiled surface of the Fresnel lens 409 from dust and mechanical influences accompanying wiping the display exit window on the windshield, as well as reducing the deterioration of the image contrast that occurs under high external sunlight due to the weakening of direct sunlight. light entering the inside of the housing 408 through the Fresnel lens 409 on the LCD 407. However, it is fundamentally important that the film 410 is not used in the specified standard position relative to the display surface, in which the film darkens when the viewing angle changes in the horizontal plane, but is positioned so that the darkening occurs when the viewing angle changes in the vertical plane.

As a protective film 410, for example, 3M High Clarity privacy filters manufactured by 3M can be used, which completely lose transparency, starting from a lateral angle of 30°, while maintaining the resolution of the display.

The LED white light source with a biologically adequate radiation spectrum works as follows. The radiation of blue LEDs 402, including partially reflected by a white diffusely reflecting screen 403, passes through a set of 404 prismatic compensatory and diffusely scattering films, then a photoluminescent film passes with a partial transformation into green-blue radiation in the zone 405 of the augmented reality display and with a partial transformation into red radiation in the area of displaying warning information 406, then passes through the liquid crystal display 407 and the projection plano-convex Fresnel lens 409, forming an enlarged virtual image shown in FIG. 3, and after being reflected in the windshield, it enters the driver's eye, forming on the retina of the eye an enlarged image displayed by LCD, with increased sharpness due to constriction of the pupil by LED radiation of 475-490 nm, falling within the spectral region of maximum light absorption by melanopsin at 479-483 nm.

The claimed solution makes it possible to exclude or significantly reduce the harmful effect on the human body of intense LED radiation, as well as to simplify and lighten the optical part of the display on the windshield of a car.

In connection with the use of at least two photoluminophores in the proposed display, the choice of photoluminophores is of great importance.

Photoluminophores for conversion layers are usually optical inorganic materials doped with rare earth (lanthanide) ions, or alternatively, ions such as chromium, titanium, vanadium, cobalt or neodymium. Lanthanide elements - lanthanum, cerium, praseodymium, neodymium, promethium, samarium, europium, gadolinium, terbium, dysprosium, holmium, erbium, thulium, ytterbium and lutetium.

For excitation in or near the 475-490 nm wavelength range, typical optical inorganic photoluminophores include yttrium aluminum garnet (YAG or Y3Al5O12), terbium containing garnet, yttrium oxide (Y₂O₃), YVO₄, SrGa₂S₄, (Sr, Mg, Ca, Ba) (Ga, Al, In)₂S₄, SrS, and nitridosilicates. Typical photoluminophores for LED excitation in the 400-490 nm wavelength range include YAG: Ce³⁺, YAG: Ho³⁺, YAG: Pr³⁺, SrGa₂S₄: Eu²⁺, SrGa₂S₄: Ce³⁺, SrS: Eu²⁺ and nitridosilicates doped with Eu²⁺; (Lu_{1-xya-b}YₓGd_{y})₃(Al_{1-z}Ga_{z})₅O₁₂: Cea³⁺ Pr_{b}³⁺, where 0 <x <1, 0 <y <1, 0 <z <= 0.1, 0 <a <= 0.2 and 0 <b <= 0, 1 including, for example, Lu₃Al₅O₁2: Ce³⁺ and Y₃Al₅O₁₂: Ce³⁺; (Sr_{1-a-b}Ca_{b}Ba_{c}) SiₓN_{y}O_{z}: Euₐ²⁺ (a = 0.002-0.2, b = 0.0-0.25, c = 0.0-0.25, x = 1.5-2.5, y = 1, 5-2.5, z = 1, 5-2.5), including, for example, SrSi₂N₂O₂: Eu²⁺; (Sr₁₋ᵤ₋ᵥ₋ₓMgᵤCaᵥBaₓ) (Ga_{2-y-z}Al_{y}In_{z}S₄): Eu²⁺, including, for example, SrGa₂S₄: Eu²⁺ and Sr₁₋ₓBaₓSiO₄: Eu²⁺.

The proposed display on the windshield uses specially designed green-blue photoluminophores with the general stoichiometric formula: Y_{3-y-z}Lu_{y}Ce_{z}Al₅₋ₓGaₓO₁₂, where 1.8 <x <2.1, 0≤y≤2.86.

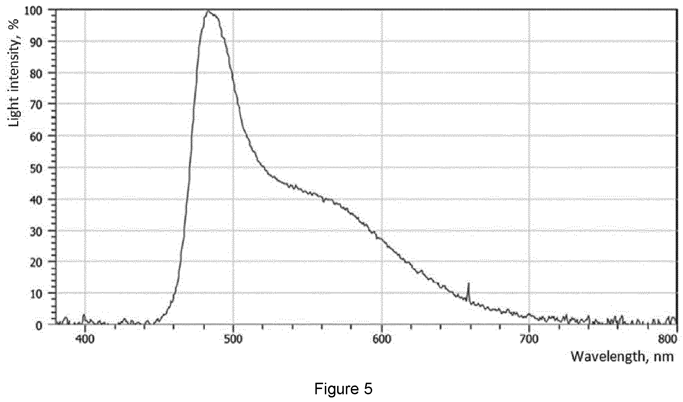

Figure 5 shows the spectrum of the created LED backlight with a biologically adequate radiation spectrum for the augmented reality display area of the liquid crystal display on the windshield of a car, formed by a film containing the photoluminophor SDL-4940 (Y_{2.79}Ce_{0.12}Lu_{0.09}Al_{3.1}Ga_{1.9}O₁₂).

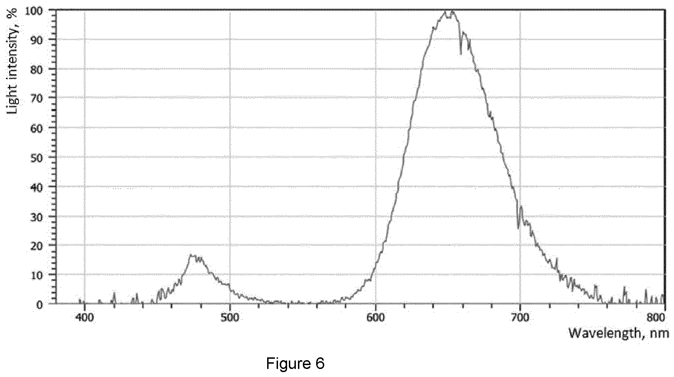

Figure 6 shows the spectrum of the created LED backlight with a biologically adequate radiation spectrum for the zone of displaying warning information of the liquid crystal display on the windshield of a car, formed by a film containing a red PLS-650 photoluminophor.

The red light emitting phosphor can be selected from a known group including (Sr_{1-a-b-c}Ba_{b}Ca_{c})₂Si₅N₈: Euₐ (a = 0.002-0.2, b = 0.0-1.0, c = 0.0-1.0); (Ca₁₋ₓ₋ₐSrₓ)S:Euₐ, (a = 0.0005-0.01, x = 0.0-1.0); Ca₁₋ₐSiN₂:Euₐ (a = 0.002-0.2); and (Bai-x-aCax) Si₇N₁₀:Euₐ (a = 0.002-0.2, x = 0.0-0.25); (Ca₁₋ₓSrₓ)S:Eu²⁺, where 0 <x <= 1, including, for example, CaS: Eu²⁺ and SrS: Eu²⁺; (Sr_{1-x-y}BaₓCa_{y})_{2-z}Si₅₋ₐAlₐN₈₋ₐOₐ:Eu_{z}²⁺ where 0 <= a <5, 0 <x <= 1, 0 <= y <= 1 and 0 <z <= 1, including, for example, Sr₂Si₅N₈: Eu²⁺.

The present invention uses a red glow photoluminophor FLS-650, manufactured by ZAO Luminofor, which belongs to phosphors with the general formula (Ba, Ca, Zn, Eu)₂S₄ with the following ratio of components (Ba: 0.9-1.4; Ca : 0.9-0.4; Zn: 0.05-0.15; Eu 0.02-0.05), by changing the ratio of which it is possible to change the position of the maximum and the half-width of the radiation spectrum within a fairly wide range.

Nanostructured organosilicon phosphors (NOL41, NOL42) manufactured by OOO Luminotech, which have a high quantum yield of photoluminescence up to 91% and a large pseudo-Stokes shift of 101 nm, can also be used as red photoluminescent phosphors.

As photoluminophores can also be used quantum dot materials - small particles of inorganic semiconductors, having a size of less than about 30 nm. Typical quantum dot materials include, but are not limited to, CdS, CdSe, ZnSe, InAs, GaAs, and GaN particles. Quantum point materials can absorb light of one wavelength and then re-emit light at different wavelengths, which depend on particle size, particle surface properties, and the inorganic semiconductor material.

Photoluminescent films can include either a single type of photoluminescent phosphor material or quantum dot material, or a mixture of photoluminescent phosphor materials and quantum dot materials.

Photoluminescent films are made in the form of a dispersion in a material that is optically transparent to LED and photoluminophor radiation.

Transparent materials can include polymeric and inorganic materials. Polymeric materials include, but are not limited to: acrylates, polycarbonate, fluoroacrylates, perfluoroacrylates, fluorophosphinate polymers, fluorosilicones, fluoropolyimides, polytetrafluorethylene, fluorosilicones, sol-gels, epoxy resins, thermoplastics, and thermal plastics. Fluoropolymers are particularly useful in the ultraviolet wavelength ranges less than 400 nm and infrared wavelengths greater than 700 nm due to their low light absorption in these wavelength ranges. Typical inorganic materials include, but are not limited to: silicon dioxide, optical glasses, and chalcogenide glasses.

In some cases, it is preferable to incorporate a photoluminescent substance into a photoluminescent film material, for example, a transparent plastic such as polycarbonate, PET, polypropylene, polyethylene, acrylic, formed by extrusion. In this case, the photoluminescent film can be pre-fabricated in sheets. In this case, a suspension of photoluminophor, surfactants and polymer is prepared in an organic solvent. The slurry can then be formed into a sheet by extrusion or injection molding, or poured onto a flat substrate such as glass, followed by drying. The resulting sheet can be detached from the temporary backing and cut to size. In a specific case, from a suspension of particles of an experimental photoluminophor based on yttrium-gadolinium-cerium (Y, Gd, Ce) 3Al5O12 aluminogranate in a solution of polycarbonate in methylene chloride, sheets of different thicknesses were formed by extrusion. The film must be thick enough to achieve the desired spectral values for mixed white light. The effective thickness is determined by the optical scattering processes in the photoluminophores used and lies, for example, between 50 and 200 µm.

The photoluminescent films used in the examples of the present invention are made on the basis of a two-component silicone compound OE 6636 manufactured by Dow Corning (OE) with the addition of specially developed photoluminophores (LF) with the general stoichiometric formula: Y3-y-zLuyCezAl5-xGaxO12, where 1.8 < <2.1, 0≤y≤2.86, 0.12≤z≤0.15, and also commercially available calcium sulfide photoluminophor FLS-650.

In particular:
- LF-5870 [Lu_{2,85}Ce_{0,15}Al₄Ga₁O₁₂] with λₚ = 510.8 nm;
- LF-4940 [Y_{2,79}Ce_{0,12}Lu_{0,09}Al_{3,1}Ga_{1,9}O₁₂] with λₚ = 528 nm;
- LF-5115 [Y_{2,88}Ce_{0,12}Al₃Ga₂O₁₂] with λₚ = 525 nm;
- LF-5260 [Y_{2,88}Ce_{0,12}Al_{2,9}Ga_{2,1}O₁₂] with λₚ = 525 nm.

Table 1 presents data on the weight ratios of the silicone base (OE) and phosphors (LF), as well as the thicknesses of the films used:

**Table 1**

| **P/p No.** | **LF** | **Ratio OE:LF** | **Film thickness, microns** | |
|---|---|---|---|---|
| 1 | LF -5870 | 1 : 1,5 | | 50-180 |
| 2 | - " - | 1 : 1,8 | | 120-140 |
| 3 | LF -4940 | 1 : 1 | | 50-60 |
| 4 | - " - | 1 : 1,5 | | 170-200 |
| 5 | - " - | 1 : 1,3 | | 130 |
| 6 | - " - | 1 : 1,8 | | 120-130 |
| 7 | - " - | 1 : 2 | | 130-140 |
| 8 | LF -5115 | 1: 1,8 | | 120-140 |
| 9 | LF -5260 | 1: 1,8 | | 120-130 |
| 10 | FLS-650 | 1 : 1,5 | | 140 |

Photoluminescent films were prepared by thoroughly stirring the corresponding weighed portions of photoluminescent phosphor in a preliminarily prepared mixture of two initial components of the silicone optical compound OE 6636, followed by applying a photoluminescent mixture of the required thickness to the lavsan film using an applicator and subsequent annealing in air for 1 hour at a temperature of 100 °C. After annealing, the photoluminescent film is easily separated from the Mylar film and, after cutting, is installed in the LED backlight.

The surface of the photoluminescent film can be additionally covered with a transparent protective layer that prevents moisture and / or oxygen from entering the film, increasing the reliability of the light source, since some types of photoluminescent phosphors, for example, sulphide ones, are susceptible to moisture damage. The protective layer can be made of any transparent material that retains moisture and oxygen, for example, inorganic materials such as silicon dioxide, silicon nitride or alumina, as well as organic polymer materials or a combination of polymer and inorganic layers. The preferred materials for the protective layer are silicon dioxide and silicon nitride.

The protective layer can also perform the function of optical clarification of the photoluminescent phosphor grain boundary with a transparent photoluminescent film base and reduce the reflection of the primary LED radiation and the secondary radiation of the photoluminescent phosphor grains at this boundary, reducing the absorption losses of the photoluminescent phosphor intrinsic radiation in its grains, and thereby increasing the efficiency of LED backlighting.

The protective layer can also be applied by finishing surface treatment of the photoluminescent phosphor grains, in which, for example, a nanosized zinc silicate film with a thickness of 50-100 nm is formed on the surface of the grains, which antireflects the photoluminophor grain boundary. The composition and thickness of the films are selected empirically to obtain maximum light output.

### Example 1.

The car windshield display is made using a monochrome active matrix LCD type WF35NTVAJDNN0 # with a diagonal of 3.5 "with a resolution of 240x320 pixels manufactured by Winstar Display Co., LTD, a plastic (PMMA) Fresnel lens type MY-D112 ^{∗} 73F100 2 mm thick with a focal length 100 mm manufactured by Shénzhen Meiying Teshnologu Co, Ltd, biologically adequate illumination spectrum is made on the basis of blue SMD LED type L135-B475003500001 manufactured by Lumileds. Photoluminescent films for the augmented reality display zone with a thickness of 130 microns are based on the optical silicone compound OE 6636 manufactured by Dow Corning with the addition of photoluminescent phosphor LF-4940 in a ratio of 1: 1.3. Photoluminescent films for the area for displaying warning information with a thickness of 140 microns are also created on the basis of an optical silicone compound OE 6636 manufactured by Dow Corning with the addition of photoluminescent phosphor FLS-650 manufactured by ZAO Luminofor in a ratio of 1: 1.5. The printed circuit board and display housing are made of aluminum alloy with high thermal conductivity. The white reflective screen is made of White98 Film F-16 diffusely reflective film with a reflectivity of 98% manufactured by WhiteOptics LLC. We used Vikuiti BEF prismatic expansion films and 3M High Clarity Privacy Filters. For the sticker on the windshield of the car, a standard transparent PET film with a size of 150 ^{∗} 125 mm and a thickness of 0.2 mm was used.

### Example 2.

The car windshield display is made using a monochrome active matrix LCD type LCD Module LS027B7DH01LCD with a diagonal of 2.7 "and a resolution of 240x400 pixels manufactured by Sharp Corporation LCD Group, plastic (PMMA) Fresnel lens type MY-D110 ^{∗} 90F90 2 mm thick with a focal length 90 mm manufactured by Shenzhen Meiying Teshnologu Co, Ltd. The rest of the display elements correspond to those of Example 1.

### Literature

1. G.C. Brainard, J.P. Hanifin, J.M. Greesonetal. J. of Neuroscience 21 (16), 6405 (2001)
2. Fabio Falchi, Pierantonio Cinzano, Christopher D. Elvidge, David M. Keith, Abraham Haim, "Limiting the impact of light pollution on human health, environment and stellar visibility." Journal of Environmental Management, v. 92, No. 10, pp. 2714-2722 (2011).
3. Hollan J. Metabolisminfluencing light: measurement by digital cameras. Poster at "Cancer and Rhythm", Oct. 14-16, Graz, Austria, 2004. (http://amper.ped.muni.cz/noc/english/canc_rhythm/g_camer.pdf)
4. M.A. Mainster. Violet and blue light blocking intraocular lenses: photoprotection versus photoreception. British Journal of Ophthalmology, 90, pp. 784-792 (2006).
5. V. Ulasyuk, N. Soschin. Biologically adequate white LED lamps based on rare earth phosphors 4th International Workshop on PHOTOLUMINESCENCE IN RARE EARTHS: PHOTONIC MATERIALS AND DEVICES (PRE'12). Kyoto, Japan, 28-30 March 2012.
6.V.A. Kaptsov, V.N. Ulasyuk, V.N. Deinogo. Semiconductor white light sources with biologically adequate radiation spectrum. "Eye", Journal for Ophthalmologists and Optometrists. 1 (119), pp. 25-32 (2018).
7. Kaptsov V.A., Deinogo V.N. Violation of the melanopsin effect of pupil constriction is a risk factor for eye disease // Health Risk Analysis. No. 1, pp. 132-148 (2017).
8. V.N. Deinogo, V.A. Kaptsov. Biologically adequate metro light. "METRO INFO International" No. 1 p.11-13 (2018).
9. Final resolution of the 3rd Global Pediatric Congress, London 2018: https://d2cax41o7ahm5l.cloudfront.net/cs/pdfs/pediatric-ophthalmology-2018-23511-final-resolution-of-the-3rd-global-pediatric- congress-london-201846825.pdf)

## Claims

1. Automotive display on the windshield, including LED illumination arranged in series along the optical axis, a system of optical films, including diffuse scattering and raster prismatic films designed to ensure uniformity of illumination radiation, a liquid crystal imaging device and an optical lens that projects an image formed on liquid crystal display, into the space in front of the car windshield. **characterized in that** the LED backlight consists of at least one LED with a peak blue wavelength of 475-490 nm, the system of optical films includes at the output a composite (zoned) composite photoluminescent film containing photoluminescent substances in a transparent base for converting blue LED radiation into green-blue radiation for the display zone of augmented reality of the display and red radiation for the display zone of warning information, and as an imaging device used monochrome liquid crystal display, and a plastic Fresnel lens is used as the lens.

2. Automotive display on the windshield according to claim 1, **characterized in that** the composite photoluminescent film for illuminating the augmented reality display area contains a photoluminophore with a composition described by the stoichiometric formula _{Y3-y-z}Lu_{y}Ce_{z}Al₅₋ₓGaₓO₁₂, where 1.8 <x <2, 1, 0≤y≤2.86, 0.12≤z≤0.15.

3. Automotive display on the windshield according to claim 1, **characterized in that** the composite photoluminescent film for illuminating the area for displaying warning information contains a photoluminescent substance with a composition described by the stoichiometric formula (Ba, Ca, Zn, Eu) 2S4 with the following ratio of components (Ba: 0.9-1.4; Ca: 0.9-0.4; Zn: 0.05-0.15; Eu 0.02-0.05).

4. Automotive display on the windshield according to claim 1, **characterized in that** the thickness of the composite photoluminescent film for illuminating the display areas of augmented reality and warning information is 50-200 microns, with the photoluminescent phosphor content in the range from 1: 1 to 2: 1 weight fractions in relation to a transparent basis.
